# EUROPÄISCHE PATENTSCHRIFT

(11) **EP 0 737 406 B1**
(45) Veröffentlichungstag und Bekanntmachung des Hinweises auf die Patenterteilung: **10.06.1998**
(21) Anmeldenummer: 95904496.7
(22) Anmeldetag: 16.12.1994
(51) Int. Cl.: H04N 13/04

(54) **VERFAHREN UND VORRICHTUNG ZUR DARSTELLUNG VON STEREOSKOPISCHEN VIDEOBILDERN AUF EINEM DISPLAY**
METHOD AND DEVICE FOR DISPLAYING STEREOSCOPIC VIDEO IMAGES
PROCEDE ET DISPOSITIF PERMETTANT D'AFFICHER DES IMAGES VIDEO STEREOSCOPIQUES SUR UN ECRAN DE VISUALISATION

(30) Priorität: 29.12.1993 CH 3890/93; 17.01.1994 CH 135/94; 24.01.1994 CH 198/94; 17.05.1994 CH 1524/94
(43) Veröffentlichungstag der Anmeldung: 16.10.1996
(73) Patentinhaber: Leica Mikroskopie Systeme AG, 9435 Heerbrugg (CH)
(72) Erfinder: STÜTTLER, Herbert, M., A-6830 Rankweil (AT)
(74) Vertreter: Stamer, Harald
(86) Internationale Anmeldenummer: EP9404198
(87) Internationale Veröffentlichungsnummer: WO9518512

(56) Entgegenhaltungen:
- EP-A- 0 416 875
- EP-A- 0 536 722
- WO-A-93/08665
- GB-A- 2 142 200
- US-A- 4 393 400

## Beschreibung

Diese Anmeldung betrifft ein Verfahren und eine Vorrichtung zur Darstellung von stereoskopischen Videobildem auf einem Display. Solche Verfahren sind bekannt und in der Praxis mit einigem Aufwand verbunden, um sicher zu stellen, dass die auf dem Display dargestellten Stereobilder auch über ausreichende Qualität verfügen und vor allem auch dass rechte und linke Teilbilder in der richtigen Reihenfolge dargestellt werden.

In der US-A-4 393 400 sind zwei Bildspeicher (100, 110) vorgesehen, in denen jeweils die stereoskopischen Bilder aus einem Standard-Videosignal abgespeichert werden. Ein Stereobild liegt während einer gesamten Bildperiode, die durch die TV-Bildfrequenz gegeben ist, in den Bildspeichern (100, 110) vor. Aus diesen Speichern wird während der Bildperiode das linke und rechte Stereo-Teilbild abwechselnd mehrfach ausgelesen und am Bildschirm dargestellt. Dadurch entsteht für das Auge ein flackerfreies Bild. Durch die mehrfache Auslesung und Darstellung der Stereoteilbilder sind entsprechend hohe horizontale und vertikale Ablenkfrequenzen des Bildschirms notwendig. Die in die Bildspeicher (100, 110) eingespeisten Videosignale sind herkömmliche Standard-Videosignale, bei denen Halbbilder mit nur geradzahligen bzw. nur ungeradzahligen Fernsehzeilen nacheinander übertragen und dargestellt werden.

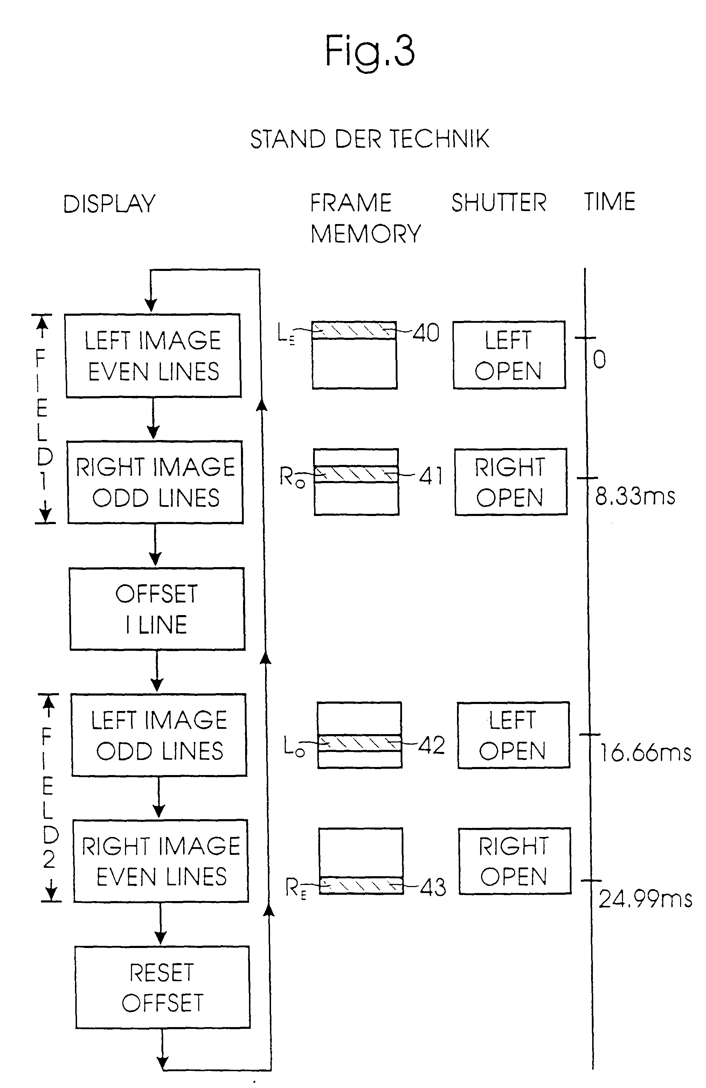

Um bei guter Auflösung eine im wesentlichen flimmerfreie Darstellung zu gestatten, schlägt eine amerikanische Patentschrift US-A-5083851 vor, computergesteuert für jedes Auge eines Betrachters innerhalb von 30 ms je zwei unterschiedliche Halbbilder (ein gerades und ein ungerades) vorzuführen. Dadurch wird die Auflösung wesentlich verbessert, zumal jedem Auge - zumindest theoretisch - die volle Bildinformation des jeweiligen Teilbildes zugeführt wird. Das Verfahren benutzt dazu einen Bildspeicher, der insgesamt alle vier Halbbilder von zwei Teilbildem während 60 ms speichert und zweimal (während je 30 ms) an das Display abgibt. In Fig.3 ist dieses bekannte Verfahren als Stand der Technik dargestellt.

Nach dem bekannten Verfahren werden während 15 ms dem linken Auge ein linkes gerades Halbbild und dem rechten Auge ein rechtes ungerades Halbbild vorgeführt, während in den nächsten 15 ms dem linken Auge ein linkes ungerades Halbbild und dem rechten Auge ein rechtes gerades Halbbild vorgeführt werden. Dieser Vorgang wird sodann während den nächsten 30 ms einmal wiederholt, bevor dann ein neues linkes und ein neues rechtes Teilbild in den Bildspeicher eingelesen werden. Ein Shutter öffnet dem linken und rechten Auge abwechselnd den Blick auf das Display, so dass während 60 ms der Shutter acht mal seinen Zustand ändem muss, um die jeweiligen Teilbilder den jeweiligen Augen zugänglich zu machen. Dies bedeutet eine relativ hohe Schaltfrequenz und entsprechende Qualitätsanforderungen an den Shutter, der meist als LCD-Schaltelement ausgebildet ist und daher mit steigerender Schaltfrequenz problematischer zu betreiben ist, da die Trägheit der Flüssigkristallelemente bremsend wirkt. Bei geringfügigen Schaltverzögerungen kann es leicht zu einem Übersprechen kommen, bei dem nachteiligerweise einem Auge auch Halbbildinformationen oder Teile davon, die für das andere Auge bestimmt sind, zugeführt werden und die an und für sich gute Auflösung wieder zunichte gemacht werden könnte. Die Nachleuchtzeit z.B. eines Monitors hat dabei auch eine gewisse Bedeutung. Sie darf bei diesem bekannten Verfahren nur äusserst kurz (maximal ca. 4 ms) sein, da pro dargestelltem Halbbild für ein Auge ein Halbbild mit vorzugsweise schwarzer Bildinformation erforderlich ist. Leuchtet ein solches Halbbild jedoch mit seinem vorherigen Bildinhalt noch nach, so ist dies in der Regel ein Bildinhalt, der nur für das andere Auge bestimmt war. Da dieser Bildinhalt jedoch auf dem einen Halbbild steht, während der richtig darzustellende Bildinhalt auf dem anderen Halbbild steht, wird er nicht sukzessive überschrieben, sondem u.U. erst nach 8 ms, wenn die Zeilen dieses Halbbildes wieder überschrieben werden. Dies kann für den Betrachter zu einem Diskomfort führen. Um diesen so gering wie möglich zu halten, muss die Nachleuchtzeit des Bildschirmes reduziert werden, was zu einem objektiven Lichtverlust führen kann, der gerade in heikelen Anwendungsfällen, wie z.B. in der Operationsmikroskopie äusserst unerwünscht ist.

Die jüngere DE-C-4134033 versucht bei einem ähnlichen Verfahren, bei dem insbesondere mit herkömmlichen Videokameras und herkömmlichen Femsehgeräten das Auslangen gefunden werden soll, die erwähnten Nachteile dadurch zu verhindem, dass auf die Darstellung eines geraden und ungeraden Halbbildes pro Teilbild überhaupt verzichtet wird und pro Teilbild überhaupt nur entweder ein gerades oder ein ungerades Halbbild dargestellt wird. Für gehobene Ansprüche an die Darstellungsqualität genügt das dort beschriebene Verfahren jedoch nicht, da die Auflösung auf dem Femsehgerät für solche Ansprüche nicht ausreicht, zumal die gesamte Darstellung in Halbbildtechnologie durchgeführt wird. Bei dieser Technologie wird im wesentlichen auf ein Halbbild pro Teilbild verzichtet, so dass für das eine Auge eines Betrachters jeweils nur ein Halbbild (z.B. das gerade) eines Teilbildes (z.B. des rechten) während für das andere Auge jeweils nur ein anderes Halbbild (z.B. das ungerade) eines anderen Teilbildes (z.B. des linken) dargestellt wird.

Die Auflösung des stereoskopischen Bildes auf dem Femsehschirm ist somit bei bekannten Verfahren für viele Anwendungsfälle ungenügend, die Shutterfrequenz beim erstbeschriebenen Verfahren unerwünscht hoch, die Bildhelligkeit bei etlichen bekannten Lösungen ungenügend und die Gefahr von Übersprechen nicht gänzlich ausgeräumt, was bei längerem Betrachten zu Kopfschmerzen und Diskomfort führen kann.

Der Erfindung liegt demgegenüber die Aufgabe zugrunde, ein einfaches und sicheres Verfahren zu finden, bei dem die Bilddarstellungsqualität gegenüber den bekannten Verfahren verbessert ist und die angeführten Nachteile weitgehend vermieden werden.

Die Aufgabe wird durch die Verfahrensschritte gemäss Anspruch 1 bzw. durch die Vorrichtungsmerkmale gemäß Anspruch 17 gelöst und durch weitere verbesserte Verfahrensabläufe bzw. Varianten dazu entsprechend den abhängigen Verfahrensansprüchen spezieller gelöst. Durch das neue Verfahren werden helle Stereobilder höchster Auflösung und mit keinerlei unangenehmen Nebeneffekten erzeugt, wobei das neue Verfahren mit einer Reihe von verschiedensten bekannten Shuttern - zB. mit einem solchen, wie er in der zitierten DE-C-41 34 033 beschrieben ist, angewendet werden kann. Bevorzugt wird als Shutter verwendet: SGS 410 16 Zoll LCS Stereoshutter oder SGS 610 19 Zoll LCS Stereoshutter von der Firma Tektronix.

Als Display wird bevorzugt ein Monitor entsprechend einem der folgenden verwendet: 447B von der Firma Nokia oder GDN 17E01 von der Firma Sony.

Für die Aufnahme der Videobilder können auch eine Vielzahl bekannter Verfahren eingesetzt werden, wobei in der Regel und bevorzugt zwei Videokameras oder eine Videokamera mit einem optisch geschalteten Strahlengang eingesetzt werden. In diesem Zusammenhang wird auf die schweizerische Patentanmeldung 3890/93-3 verwiesen (entspricht WO-A-9 518 511 und WO-A-9 518 512 veröffentlich am 06.07.1995), die ein Verfahren zur Aufzeichnung und Wiedergabe von stereoskopischen Videobildern zum Gegenstand hat.

Die Erfindung bezieht sich im speziellen auf die Verarbeitung von Videosignalen aus Videokameras, aber auch aus Videoaufzeichnungsgeräten usw. Die nachfolgende Beschreibung ist daher nur beispielhaft und zeigt daher nicht alle Ausführungsvarianten auf, die durch die Patentansprüche unter Schutz gestellt sind.

Die Videobilder (wenigstens je ein rechtes und ein linkes) werden in zwei Videokanälen (z.B. aus je einem rechten und einem linken Bilderfassungsgeräten) eingespeist und dann abwechselnd zweimal hintereinander dasselbe Teilbild am Display dargestellt; Im Falle von zwei Vollbildkameras (progressive scan) wird beispielsweise der Inhalt jedes Kamera-CCD's zweimal abgefragt - wozu er vorzugsweise in einem Bildspeicher zwischengespeichert wird - und am Display in derselben Reihenfolge dargestellt. Natürlich sind dabei die Zeitdauer und die Frequenz der Darstellung der Teilbilder (Vollbilder) von Bedeutung, wobei ein zeitlicher Rahmen von unter 50 ms pro vier Teilbilddarstellungen, insbesondere von 40 ms oder 30 ms optimal ist.

Die Erfindung lässt sich aber auch sehr gut bei Systemen anwenden, die mit herkömmlichen Videokameras mit Halbbildem nach dem Zeilensprungverfahren (interlaced scan) arbeiten, bei denen sowohl das Signal der dem linken Auge zugeordneten Kamera als auch das Signal der dem rechten Auge zugeordneten Kamera gerade und ungerade Videohalbbilder aufweist. Die Erfindung umfasst jedoch auch eine Variante, bei der pro Bilderfassungsgerät der Einfachheit halber überhaupt nur je ein Halbbild erzeugt wird und erst später durch Interpolation aus jedem Halbbild ein dazupassendes zweites Halbbild generiert wird. Bei solchen Varianten mit Halbbildem oder künstlich generierten Halbbildem daraus werden diese vorteilhaft zunächst über eine Bildspeichervorrichtung (z.B. Vollbildspeicher) zu einem als Vollbild (progressive scan) darstellbaren Bild zusammengesetzt, um dadurch die Nachteile US-Patentschrift US-A-5083851 zu entgehen.

Die durch die Erfindung gewonnenen stereoskopischen Bilder erlauben ein ergonomisch richtiges und helles Sehen.

Vorteilhaft kommt es bei der Erfindung auch zu einer Verdoppelung von synchronen und asynchronen gleichzeitig anliegenden Standdardvideosignalen.

Die Ausbildung nach Anspruch 4 reduziert weiter die Gefahr eines Übersprechens, zumal der Shutter der Schreibrichtung des Elektronenstrahls (Zeilenlaufrichtung) streifenweise folgt.

Nach einem weiteren Ausführungsbeispiel wird jedes aus einer Videokamera gewonnene Halbbild durch eine Recheneinheit zu einem Vollbild interpoliert bzw. integriert und jeweils nur einmal am Display dargestellt. Daraus ergibt sich eine doppelte Refreshrate, weil statt des wiederholten Darstellens eines Teilbildes nun nach einem ersten Vollbild bestehend aus einem ersten Halbbild und einem weiteren interpolierten Halbbild ein zweites Vollbild bestehend aus einem zweiten Halbbild und einem weiteren interpolierten Halbbild dargestellt wird. Da das zweite Vollbild das zweite, zeitlich dem ersten Halbbild nachfolgende Halbbild umfaßt, wird eine Darstellung erzielt, die dem wirklichen Bewegungs-Zustand wesentlich näher kommt. Größere Bewegungsgeschwindigkeiten am betrachteten Objekt sind ohne Vorliegen von Streifenziehen wahmehmbar. Außerdem ergeben sich trotz der Anwendung von Interpolationsverfahren keine wahmehmbaren Unschärfen bei der Darstellung in dem Display. Dies resultiert aus dem Umstand, daß das jeweils nachgelieferte zweite interpolierte Bild gerade in jenen Zeilen, in denen das erste interpolierte Bild die berechnete, interpolierte Bildzeileninformation darstellt, die unveränderten, nicht berechnete Bildinformationen wiedergibt. Dadurch werden Rechen - bzw. Interpolationsungenauigkeiten ausgeglichen, so daß sie nicht mehr wahmehmbar sind.

Die erwähnten Ausführungsbeispiele haben alle den Vorteil, dass am Monitor ein flimmerfreies stereoskopisches Vollbild darstellbar ist.

Nähere Einzelheiten der Erfindung sind in folgenden anhand von Ausführungsbeispielen näher erläutert. Die Figuren zeigen dabei insbesondere:
- Fig.1: einen Aufnahmeteil einer erfindungsgemässen Vorrichtung mit 2 zusammengehörigen Vollbildkameras;
- Fig.2: eine schematische Darstellung der Signalfolge am Ausgang der Framegrabber (z.B. zugehörig zu den Kameras nach Fig.1) und am Display;
- Fig.3: den Stand der Technik gemäss dem zitierten US Dokument im Vergleich zur Fig.2 mit einer interlacten Halbbilddarstellung;
- Fig.4: einen Aufbau mit zwei herkömmlichen Videokameras mit Standard-Videosignal und Umwandlung dieser Signale in Vollbilder, so dass am Display progressiv gescannte Vollbilder altemierend dargestellt werden können;
- Fig.5: eine Altemative, bei der die Standard-Videosignale aus einem Videorekorder stammen und generierte Vollbilder dargestellt werden;
- Fig.6: eine weitere Altemative für den ersten Teil des Wiedergabeteiles nach Fig.5;
- Fig.7: eine weitere Ausführungsform für einen Aufbau der Erfindung mit einer aktiven Shutterbrille;
- Fig.8: ein Schaubild des zeitlichen Ablaufes der Signalfolge in einer Vorrichtung nach Fig.7;
- Fig.9: ein praktisches Beispiel eines ausgeführten Interfaces mit einem Videorekordereingang YCNCR, einem Videoausgang YCNCR und zwei Videokameraeingängen IPM zur Aufzeichnung von stereoskopischen Bildem auf einem herkömmlichen Videorekorder;
- Fig. 10: eine schematische Darstellung der Signalfolge am Ausgang des Framegrabbers und am Display nach einem weiteren Ausführungsbeispiel und
- Fig. 11: ein Schaubild des zeitlichen Ablaufes der Signalfolge in einer Vorrichtung nach dem weiteren Ausführungsbeispiel.

Gleiche Bezugszeichen bedeuten gleiche Bauteile. Gleiche Bezugszeichen mit unterschiedlichen Indizes bedeuten ähnliche Bauteile.

### BEZUGSZEICHENLISTE und BEGRIFFSDEFINITIONEN

### Im Sinne der Erfindung bedeuten:

Ein stereoskopisches Videobild zwei zusammengehörende Teilbilder eines linken und rechten Bildkanales, wobei die Teilbilder wenigstens ein Video-Halbbild (HB) aufweisen, bei der Darstellung auf einem Display jedoch als Vollbild (VB) ausgebildet sind, in dem sie dann progressiv gescannt dargestellt werden. Das Vollbild (VB) kann dabei ursprünglich aus einem zusammengehörenden Paar (VB) von zwei Halbbildem (HB) aufgebaut sein. Ein solches Paar (VB) kann im Sinne der Erfindung auch aus zwei aufeinanderfolgenden ( nach dem Zeilensprungverfahren = interlaced) Halbbildem (HB) oder aus zwei gleichzeitig vorhandenen und somit nicht mehr aufgetrennten Halbbildem (progressive scan) bestehen, sofem letzteres am Display erscheint.

Interpolierte Halbbilder (HB) sind Halbbilder, die durch rechnerische Auswertung von vorhandener Bildinformation aus einem Halbbild (HB) gewonnen wurden. Vollbilder können sowohl aus HB als auch aus HB gewonnen worden sein.

Die Bezeichnung HB/A steht für Halbbilder (HB) eines Bildkanales, die Bezeichnung HB/B steht für Halbbilder des zugehörigen anderen Bildkanales. Die Indizierung X. bedeutet die fortlaufende Numerierung des jeweiligen Halbbildes (HB). Die Indizierung .1 oder .2 steht für das jeweils gerade oder ungerade Halbbild (HB).

A steht für Kontaktstellen, die im Betriebsfall miteinander verbunden sind.
1 Videoaufnahmegerät; darunter fallen z.B.: Videorekorder, Bildplattengeräte, digitale Speicher aller Art usw.
2 Videowiedergabegerät; darunter fallen alle Geräte, mit denen Aufzeichnungen von Geräten nach 1) Wiedergegeben werden können.
3 Kameraelektronik; darunter fallen alle Einrichtungen, die von einem optoelektronischen Aufnahmegerät erfasste Bilder elektronisch erfassen und verarbeitbar machen.
4 Halbbilddetektor; darunter fallen alle Signalanalyse- Vorrichtungen, die ein Halbbild (z.B. ein gerades) detektieren bzw. von einem zugehörigen zweiten Halbbild (z.B. einem ungeraden) unterscheiden können und gegebenenfalls geeignete Umschaltungen zur Signalweiterleitung vomehmen können.
5 Bilderfassungseinrichtung; darunter fallen Still- oder Bewegt-Videokameras, jedwede CCD- oder sonstige opto-elektronische Array-Schaltungen usw.
6 Video-Signal-Koppler; darunter fallen alle Schnittstellen, die Signale aus zwei parallelen Kanälen - insbesondere alternierend - auf einen elektronischen Pfad schalten. Sie können insbesondere als Graphikkarte ausgebildet sein.
7 Kamerasynchronisation; darunter fallen Synchronisierelemente, die sowohl zwei Kameraelektroniken zueinander in Gleichtakt bringen, als auch gegebenenfalls weitere Elemente zur Bildverarbeitung (z.B. Framegrabbers, Shutter) takten und/oder Signale generieren, die bei Bedarf auf Videodatenträger aufzeichenbar sind.
8 Vollbildspeicher (Framestore); darunter fallen alle Speicherelemente, die wenigstens zwei zusammengehörende Halbbilder eines Teilbildes oder wenigstens ein Vollbild speichem können. Sie dienen erfindungsgemäss insbesondere zur Frequenzerhöhung der darstellbaren Bilder im Verhältnis zur Aufnahmefrequenz, indem aus ihnen öfter (zweimal) dieselbe Bildinformation abgerufen wird. Sie ermöglichen eine unterschiedliche Ein- und Auslesegeschwindigkeit.
9 Framegrabber; darunter fallen alle elektronischen Schaltungen (Echtzeit Analog-Digital-Wandler), die Signale eines Video-Voll- oder Halbbildes in digital weiterverarbeitbare Signale umwandeln und für die Weiterverarbeitung in einem Computer o.dgl. aufbereiten.
10 Shutter ist eine elektronisch gesteuerte Blende, die - meist im Zusammenwirken mit anderen optischen oder elektronischen Bauelementen - die Sicht auf nur das eine oder andere Auge eines Betrachters freigeben. Für die Anwendung der Erfindung ist es dabei nicht wesentlich, ob der Shutter 10a unmittelbar vor dem Display ist oder, ob vor jedem Auge ein eigener Shutter 10b (aktive Brille) vorgesehen ist. Im Falle von pixelfesten Displays, z.B. LCD-Displays umfasst der Begriff Shutter im Rahmen der Erfindung auch Linsenraster o.dgl, die jedenfalls eine Auftrennung der wiedergegebenen Bildinformation für das rechte und linke Auge eines Betrachters ermöglichen (Solche optischen Bauelemente sind insofem bevorzugt, als die Betrachter ohne zusätzliche Hilfsmittel, wie Brillen usw. auskommen und deshalb auch weniger Lichtverlust in Kauf genommen werden muß).
11 Display; darunter fallen alle Bilddarstellungsgeräte und Monitore, insbesondere Elektronenstrahlröhren mit geringer Nachleuchtzeit (z.B.. unter 5-10 ms) sowie LCD-Displays usw.
12 Interpolator; darunter fallen Einrichtungen, die aus einem Halbbild zwei zusammengehörende Halbbilder schaffen, indem sie die Zeilenzwischenräume eines Halbbildes (HB) mit interpolierter Bildinformation, vorzugsweise gewonnen aus der Bildinformation der beiden die Zeilenzwischenräume eingrenzenden Zeilen des betreffenden Halbbildes (HB), füllen.
13 Videoteiler; teilt ein Videosignal von einem Pfad auf wenigstens zwei Pfade auf, so dass auf beiden Pfaden dieselben Signale anliegen.
14 Videoverstärker und Klemmvorrichtung; entsprechen den herkömmlichen Vorrichtungen bei der Videosignalverarbeitung.
15 Halbbildspeicher; darunter fallen alle jene Speicher, somit gegebenenfalls auch Vollbildspeicher, die wenigstens ein Halbbild speichem.
16 Vollbildspeicher mit Interpolation auf Framegrabber; dies sind integrierte Bauteile, die aus einem Halbbild durch Interpolation ein Vollbild kreieren und dieses in computerverarbeitbarer Form abgreifbar machen. Sie dienen erfindungsgemäss insbesondere zur Frequenzerhöhung der darstellbaren Bilder im Verhältnis zur Aufnahmefrequenz bzw. zur Schaffung einer Vollbildfrequenz aus einer vorgegebenen Halbbildfrequenz.

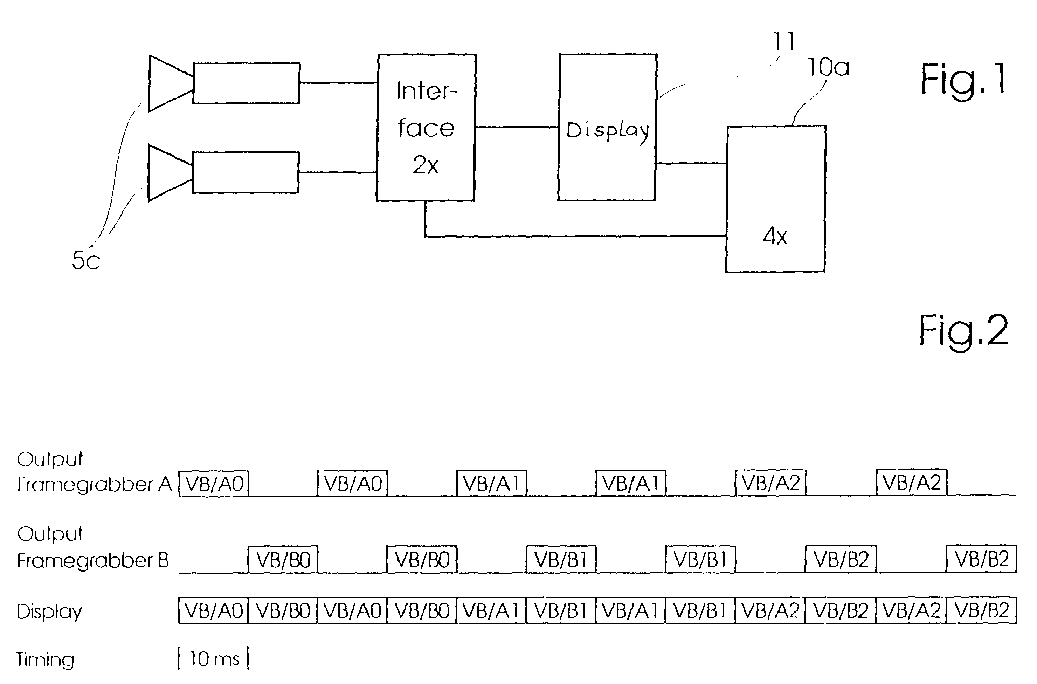

Die Fig.1 zeigt einen Aufnahmeteil einer erfindungsgemässen Vorrichtung mit zwei zusammengehörigen Vollbildkameras 5c, deren CCD's durch das Interface hintereinander in einem Intervall von je 20 ms je zweimal abgefragt und deren Inhalt je zweimal in demselben Intervall an das Display 11 weitergegeben bzw. auf diesem dargestellt werden. Ein Shutter 10a ist mit dem Display bzw. mit dem Interface synchronisiert.

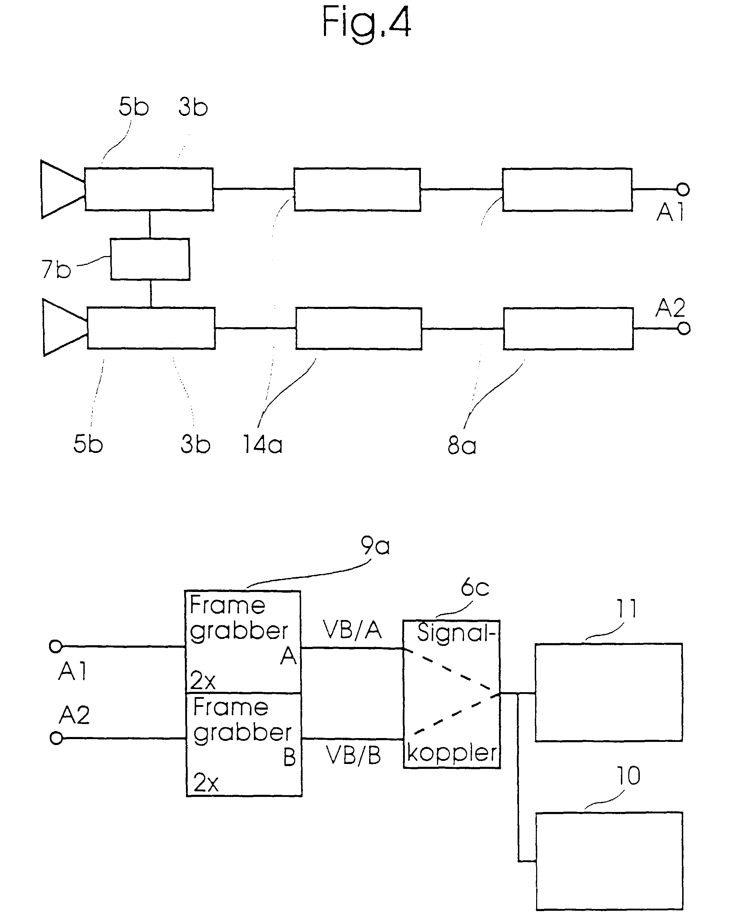

Bei einem ersten Ausführungsbeispiel werden die dem rechten und linken Auge zugeordneten Bilder eines Stereobildpaares durch zusammengehörende Kameras 5b aufgenommen (Fig.4). Eine Synchronisationsschaltung 7b dienen zur Synchronisation der von den Kameras 5b erfaßten Teilbildern zueinander. Eine Kameraelektronik 3b sorgt dafür, daß die Ausgangssignale der beiden Kameras 5b je gerade und ungerade Halbbilder HB/A1.1, HB/A1.2 bzw. HB/B1.1, HB/B1.2 aufweisen. Diese Signale werden mittels eines Videoverstärkers und einer Videoklemmvorrichtung 14a gemäss einem bestehenden Standard normiert. Danach werden die geraden und ungeraden Videohalbbilder (HB) in den beiden Kanälen in je einem Vollbildspeicher 8a gespeichert. Je ein Framegrabber 9a übemimmt sodann vorzugsweise getaktet hintereinander zweimal die abgespeicherte Bildinformation nach progressiver Scanart und leitet sie innerhalb einer Frameperiode (zB. 20-60 ms) je zweimal über einen Signalkoppler 8c an das Display 11. Ein Shutter 10, der nur die Sicht auf das eine oder andere Auge des Betrachter freigibt, ist mit dem Signalkoppler 6c verbunden.

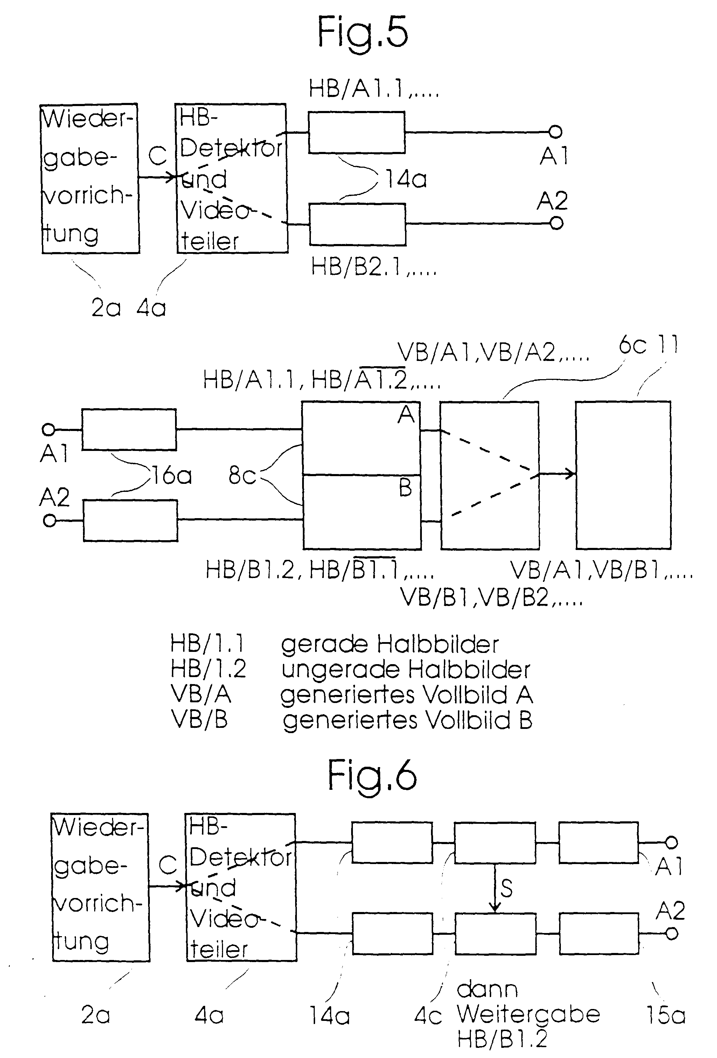

Fig.5 zeigt ein zweites Ausführungsbeispiel, bei dem Videosignale aus einer Wiedergabevorrichtung 2a entnommen und durch einen Halbbilddetektor und Videoteiler 4a voneinander getrennt werden, so dass in einem der Kanäle gerade und im zweiten Kanal ungerade Videohalbbilder verarbeitet werden.

Diese Trennung wird mit Hilfe von Videohalbbilddetektoren 4a, z.B. ein Detektor Typ SM II VI.4 von der Fast Electronic GmbH, durchgeführt. Es werden in einem der beiden Kanäle entweder die geraden oder die ungeraden Videohalbbilder (HB) detektiert und jeweils über eine Videoklemmvorrichtung 14a einem Vollbildspeicher 16a zugeführt. In diesem wird jeweils mittels einer Interpolationsschaltung ein weiteres Halbbild erzeugt, welches mit dem bereits bestehenden Halbbild je Kanal zu einem Vollbild zusammengesetzt wird. Diese nun kanalweise vorliegenden Teilbilder werden jeweils einem weiteren Vollbildspeicher 8c zugeführt, aus dem sie jeweils mit vierfacher Frequenz ausgelesen und einem Videosignal-Koppler 6c zur abwechselnden Zusammenführung der Teilbilder (TB) auf einem Display 11 zugeleitet werden.

Altemativ ist gemäß Fig.6 der Videoklemmvorrichtung 14a je Kanal ein Halbbilddetektor 4c nachgeordnet, wobei der Halbbilddetektor 4c des ersten Kanals ein Steuersignal s dem Halbbilddetektor des zweiten Kanals überträgt, nachdem das erste Halbbild HB/A1.1 des ersten Kanals detektiert worden ist. Erst danach erfolgt eine Weitergabe des zweiten Halbbildes HB/B1.2 des zweiten Kanals an den Halbbildspeicher 15a, so daß das zweite Halbbild HB/B1.2 des zweiten Kanals gleichzeitig in dem Halbbildspeicher 15a zwischengespeicherten ersten Halbbild HB/A1.1 des ersten Kanals jeweils dem Vollbildspeicher 16a zur Interpolation zugeleitet werden kann.

In den Ausführungsbeispiel gemäss Fig. 5 werden die geraden Videohalbbilder des ersten Kanals und die ungeraden Videohalbbilder des zweiten Kanals zur Weiterverarbeitung in einem dem Videokanal zugeordneten Vollbbildspeicher eingelesen, während das Ausführungsbeispiel nach Fig.6 die Zwischenschaltung von je einem Halbbildspeicher 15a vorsieht. Bei beiden Ausführungsbeispielen werden mittels eines Interpolationsverfahrens, wo von einem Teilbild zunächst nur ein Halbbild gewonnen wird, die Zeilenanzahl der gespeicherten Bilder verdoppelt. Die interpolierten Bilder der beiden Kanäle werden sodann je zweimal alternierend einem Display 11 zugeführt. Die Bilder werden als progressiv gescannte Vollbilder mit der vierfachen Horizontalablenkungsfrequenz der ursprünglichen Aufnahme mit den Kameras 5 auf dem Display 11 dargestellt.

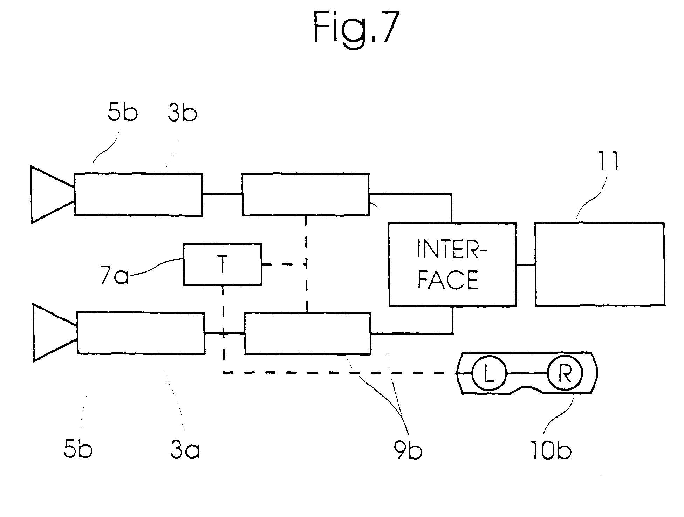

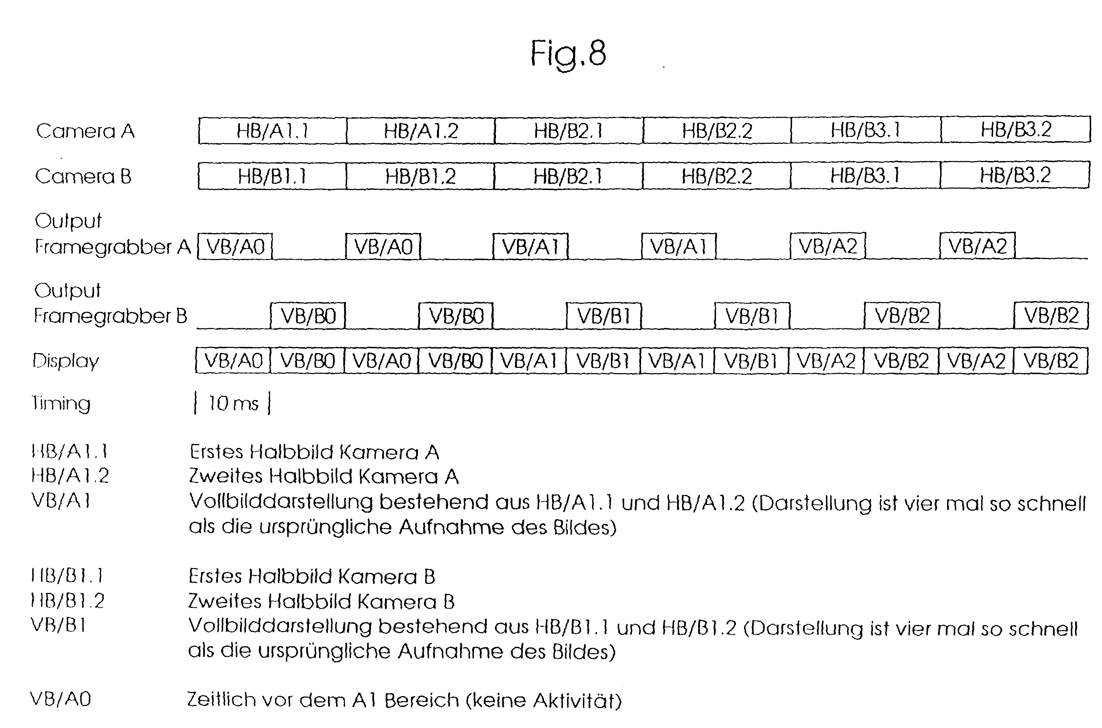

Die vereinfachte Darstellung gemäss Fig.7 zusammen mit dem Schema nach Fig.8 zeigt nochmals das Hauptwesen der Erfindung:

Zwei herkömmliche Videokameras 5b mit einer Standard Kameraelektronik 3a liefern nach dem Zeilensprungverfahren gescannte Standardvideosignale an zwei getaktete Framegrabber 9b mit integriertem Vollbildspeicher, die die Halbbilder in Vollbilder umwandeln, und wie beschrieben je zweimal (bei Bedarf auch öfter) über einen Signalkoppler 6c als Interface an das Display 11 weitergeben. Eine Synchronisationseinrichtung 7a dient zur synchronen Weitergabe der Teilbilder in den Framegrabber 9b. Ein Shutter 10b (in diesem Fall eine aktive Shutterbrille, die jeweils einem Auge die Durchsicht auf das Display behindert) nimmt die Aufteilung der dargestellten Teilbilder vor. Die Erfindung ist dabei sowohl für die PAL- als auch für die NTSC-Norm einsetzbar - auch asynchron.

Die Darstellungsgeschwindigkeit ist derart 4 mal schneller, als die Aufnahmegeschwindigkeit: Bei Bedarf könnten im Rahmen der Erfindung auch Variationsmöglichkeiten für die Darstellungsgeschwindigkeit gewählt werden, indem z.B. ähnlich einer Zeitrafferaufnahme einzelne Teilbilder nicht dargestellt werden, und Vollbilder vorheriger Teilbilder dafür öfter als 2 mal dargestellt werden. Dies könnte in bestimmten Fällen die für den Betrachter subjektiv wahmehmbare Auflösung noch verbessem.

Wie sich aus Fig. 2 bzw. Fig. 8 ergibt, werden die Halbbilder (HB) mit einer Frequenz von 50 Hz in jeder Kamera A und B eingelesen und nach der ober beschriebenen kanalweisen Weiterverarbeitung als Vollbilder von den Framegrabbem A und B mit vierfacher Frequenz ausgelesen und auf dem Display dargestellt. Jedes angegebene Vollbild eines Framegrabbers A oder B besteht aus zwei Halbbildem HB, so daß die erfaßten Halbbilder HB auf dem Display mit einer Bildfrequenz von 200 Hz dargestellt werden. Dabei werden die Teilbilder als Vollbilder abwechselnd dargestellt, wobei sie eine Frequenz von 100 Hz aufweisen. Die Teilbilder werden je Kanal unter einmaliger Wiederholung dargestellt, bevor ein weiteres Teilbild dargestellt wird. Ermöglicht wird dies durch Vollbild- bzw. Halbbildspeicher, die die Eigenschaft haben, Informationen gleichzeitig ein- und auszulesen.

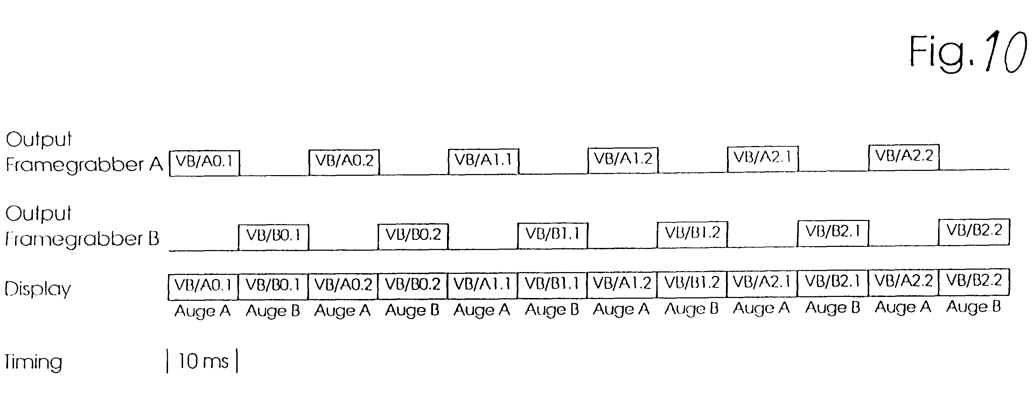

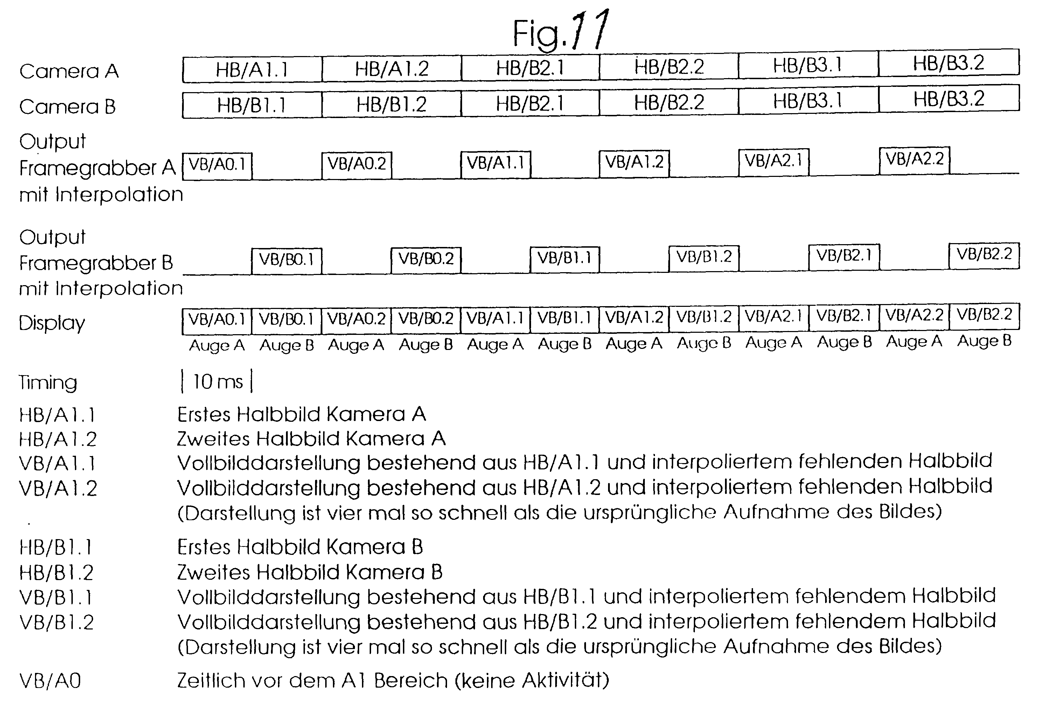

Nach einem weiteren Ausführungsbeispiel gemäß Fig. 10 und Fig. 11 werden in Übereinstimmung mit dem vorhergehend beschriebenen Ausführungsbeispiel die Halbbilder HB mit einer Frequenz von 50 Hz in jeder Kamera A un B eingelesen. Im Unterschied zu dem vorhergehenden Ausführungsbeispiel werden jedoch Halbbilder interpoliert, wobei das interpolierte Halbbild mit einem aktuelleren vorhandenen Halbbild zu einem vollständigen Teilbild generiert wird. Während das erste Vollbild des ersten Kanals aus dem ersten Halbbild und einem weiteren interpolierten Halbbild gebildet wird, entsteht das zweite Vollbild desselben Kanals aus dem zweiten statt dem ersten Halbbild und einem weiteren interpolierten Halbbild. Hierdurch läßt sich die Refreshrate verdoppeln, ohne das der Aufwand erhöht werden muß. Es werden lediglich unterschiedliche Halbbilder zur Vollbilddarstellung bzw. Interpolation herangezogen.

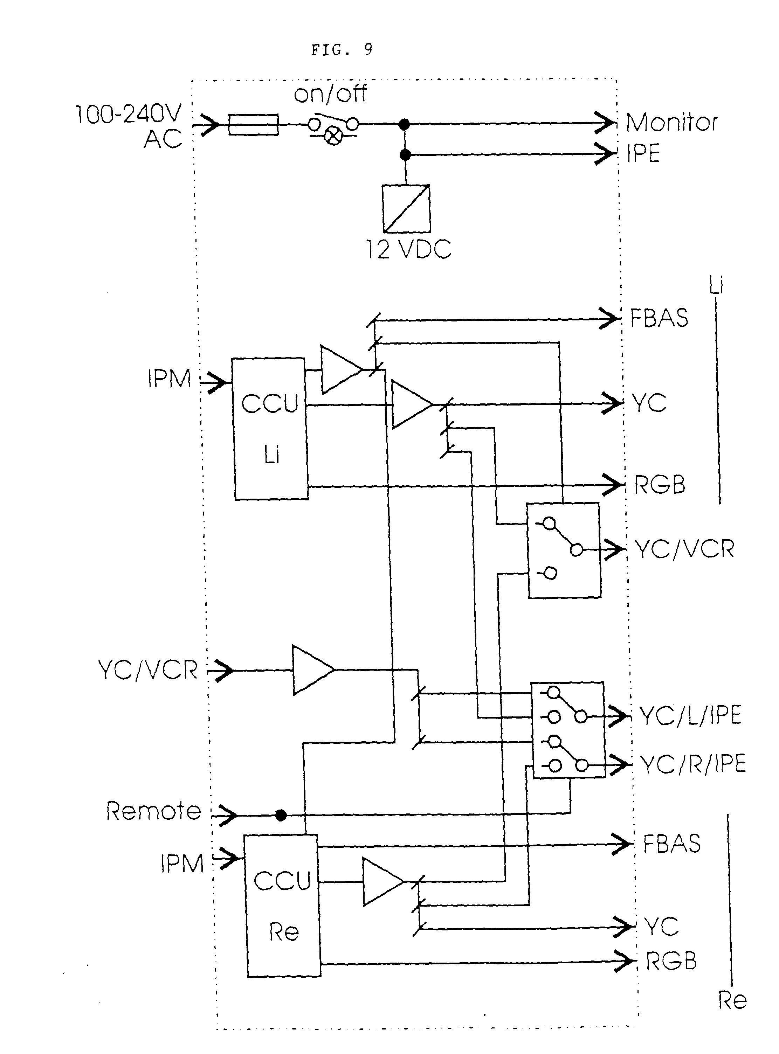

Beide vorhergehend beschriebenen Ausführungsbeispiele können als Schaltungsbeispiel ein Interface gemäß Fig. 9 aufweisen. Das Interface umfaßt die kanalweise zugeordneten zwei Halbbilddetektoren und den daran anschließenden Signal-Koppler. Am Eingang IPM des Interfaces liegen die Ausgangssignale der rechten und linken Kamera an. Diese werden kanalweise in einer Kamera-Steuereinheit (camera control unit CCU) verarbeitet, wobei in der CCU/Li der linke Kanal und in der CCU/Re der rechte Kanal verarbeitet werden. Die Ausgangssignale dieser Kamera-Steuereinheiten CCU werden dann über jeweils eine Verstärkereinrichtung zum einen einer Life-Modus-Schaltung zugeführt, in der die Signale der rechten und linken Teilbilder umschaltbar sind und dann als Ausgangssignale YC/L/IPE und YC/R/IPE über einen linken bzw. rechten Kanal einer nicht dargestellten Signalverarbeitungseinheit zur Darstellung auf einem Wiedergabemonitor weitergeleitet werden. Zum anderen werden die Ausgangssignale einer Steuerschaltung zugeführt, in der sie zur Aufnahme auf einem Videorekorder aufbereitet und als Ausgangssignale YC/VCR einem Videorekorder zugeleitet werden. Optional werden an den Ausgängen des Interfaces weitere zur Darstellung eines Bildes übliche Signale FBAS, YC und RGB erzeugt.

Weiterhin kann an einen Eingang YC/VCR des Interfaces ein Ausgangssignal eines Videorekorders gelegt werden, so daß nach der Zuführung desselben zur Life-Modus-Schaltung am Ausgang des Interfaces das auf dem Viedeorekorder aufgezeichnete Signal zur Darstellung auf dem Wiedergabemonitor zur Verfügung steht. Ein weiterer Remote-Eingang des Interfaces ermöglicht als Fembedienung die wahlweise Durchschaltung des auf dem Videorekorder aufgezeichneten Signals oder des von den Kameras erfaßten Signals. Im oberen Teil der Fig. 9 ist eine übliche Stromversorgungseinheit zu Bereitstellung der Stromversorgung des Interfaces dargestellt.

Alternativ ist die Erfindung in der oben beschriebenen Weise dazu geeignet, Vollbilder statt Halbbilder zu verarbeiten, so daß der Einsatz von Kameras gewähleistet ist, die ausschließlich Vollbilder zur Signalverarbeitung zur Verfügung stellen.

## Patentansprüche

1. Verfahren zur Darstellung eines stereoskopischen Bildes, das aus je einem rechten und einem linken Teilbild aufgebaut ist, auf einem Display (11), dem wenigstens eine Trennvorrichtung (10) zugeordnet ist, die jedem Betrachterauge stets nur Teilbilder eines Bildkanales zuordnet, dadurch gekennzeichnet, dass jedes Teilbild abwechselnd mit dem anderen Teilbild als jeweils progressiv gescanntes Vollbild auf dem Display (11) dargestellt wird.

2. Verfahren nach Anspruch 1, dadurch gekennzeichnet, dass die Teilbilder wenigstens zweimal pro Aufnahmedauer für jedes Teilbild dargestellt werden, wobei die Aufnahmedauer der Signal dauer eines Teilbildes entspricht.

3. Verfahren nach Anspruch 1 oder 2, dadurch gekennzeichnet, dass die horizontale Bildablenkung am Display (11) wenigstens 60 kHz beträgt, während die vertikale Bildablenkung mindestens 100 Hz beträgt.

4. Verfahren nach einem der Ansprüche 1 bis 3, dadurch gekennzeichnet, dass die doppelte Darstellung der beiden Teilbilder innerhalb von wenigstens 60 ms, vorzugsweise innerhalb von oder weniger als 50 ms stattfindet.

5. Verfahren nach einem der Ansprüche 1 bis 3, dadurch gekennzeichnet, daß die doppelte Darstellung der beiden Teilbilder innerhalb von oder weniger als 40 ms stattfindet.

6. Verfahren nach einem der Ansprüche 1 bis 5, dadurch gekennzeichnet, dass bei der progressiv gescannten Darstellung der Teilbilder auf dem Display (11) der Shutter (10) entsprechend der Scanrichtung (von oben nach unten bzw. von unten nach oben) sukzessive aktiviert bzw. deaktiviert wird.

7. Verfahren nach Anspruch 6, dadurch gekennzeichnet, daß der Shutter (10) mit einer zeilen- oder streifenförmigen Vertikalstruktur versehen ist, die in der Umschaltfolge der Scanrichtung am Display (11) folgt.

8. Verfahren nach einem der vorhergehenden Ansprüche, dadurch gekennzeichnet, dass die Vollbilder (VB) durch Umwandlung herkömmlicher Videosignale nach dem Zeilensprungverfahren aus je zwei Halbbildern (HB, HB) durch Zwischenspeicherung derselben in einem Bildspeicher (8;9;16) gewonnen werden, wobei die Teilbilder als Vollbilder aus den Vollbildspeichern (8a) progressiv bzw. zeilenweise ausgelesen und einem Video-Signal-Koppler (6c) zugeführt werden, aus dem die Teilbilder des einen Kanales in geeigneter Frequenz abwechselnd mit den Teilbildern des anderen Kanales dem Display (11) zugeführt werden.

9. Verfahren nach Anspruch 8, dadurch gekennzeichnet, daß die Teilbilder aus den Vollbildspeichern (8a) mittels Framegrabber progressiv bzw. zeilenweise ausgelesen werden.

10. Verfahren nach Anspruch 8 oder 9, dadurch gekennzeichnet, daß als Video-Signal-Koppler (6c) eine Graphikkarte eines Computers oder ein Wiedergabemonitor verwendet wird.

11. Verfahren nach einem der Ansprüche 8, 9 oder 10, dadurch gekennzeichnet, daß aus dem Video-Signal-Koppler (6c) die Teilbilder des einen Kanals in vierfacher horizontaler Ablenkungsfrequenz abwechselnd mit den Teilbildern des anderen Kanals dem Display (11) zugeführt werden.

12. Verfahren nach einem der vorhergehenden Ansprüche, wobei das Videosignal vom Ausgang einer Wiedergabevorrichtung (2a) stammt, dadurch gekennzeichnet, dass es einem einzigen Halbbildetektor (4a) mit integriertem Videoteiler zugeführt wird, in welch ersterem das erste Halbbild (HB/A1.1....) des Videosignals detektiert und über den Videoteiler dem ersten Kanal zugeführt wird, während das zweite Halbbild (HB/B 1.2....) dem zweiten Kanal zugeführt wird, oder dass es lediglich einem Videoteiler zugeführt wird, von wo aus die Signale in zwei Verarbeitungskanäle verteilt werden, in welchen jeweils das Teilbild, dass nicht zum zugehörigen Verarbeitungskanal gehört, ausgetastet wird, so dass in jedem Kanal ein Halbbild (HB) seines zugeordneten Teilbildes verarbeitbar ist, wobei die Signale beider Halbbilder (HB/A1.1.... und HB/B1.2....) je einem Interpolator (12a) und einem Vollbildspeicher (8b) zugeführt werden, wobei jeder Interpolator (12a) die jeweils fehlenden Zeilen zwischen dem Halbbild seines Kanales durch generierte Zeilen zu einem zweiten Halbbild (HB) zusammensetzt und dieses weiter dem jeweiligen Vollbildspeicher (8a) zuführt, so dass im Vollbildspeicher ein vollständiges Teilbild bzw. ein Paar (VB) von zwei zusammengehörenden Halbbildern zur Weiterverarbeitung und progressiv gescannten Darstellung auf dem Display (11) abgreifbar ist.

13. Verfahren nach einem der vorhergehenden Ansprüche, dadurch gekennzeichnet, dass die Teilbilder als Vollbilder aus den Vollbildspeichern (8b) - gegebenenfalls mittels Framegrabber (9a) - progressiv (zeilenweise) ausgelesen und einem Video-Signal-Koppler (6c oder 6b), z.B. einer Graphikkarte eines Computers bzw. Wiedergabemonitors, zugeführt werden, von wo aus die Vollbilder in geeigneter Frequenz in zeitlicher Reihenfolge dem Wiedergabemonitor (11) zugeführt werden.

14. Verfahren nach einem der vorhergehenden Ansprüche, wobei als Display ein LCD- oder CRT-Monitor verwendet wird, dadurch gekennzeichnet, dass die Darstellungsdauer bzw. die Nachleuchtzeit des Bildschirmes kleiner als 9 ms gewählt wird.

15. Verfahren nach Anspruch 1, dadurch gekennzeichnet, daß pro herkömmlichem Standardframe zwei Teilbilder (TB) abwechselnd mit zwei der anderen Teilbilder (TB) dargestellt werden.

16. Verfahren nach Anspruch 15, dadurch gekennzeichnet, daß jedes der beiden Teilbilder (TB), die während eines Standardframes am Display (11) dargestellt werden, aus je einem Halbbild (HB) und einem daraus durch ein Interpolationsverfahren generierten interpolierten Halbbild (HB) aufgebaut wird.

17. Vorrichtung zur Durchführung eines Verfahrens nach Anspruch 1 mit einem Display (11) zur Darstellung des stereoskopischen Bildes, wobei eine Trennvorrichtung (10) vorgesehen ist zur kanalweisen Zuordnung der Teilbilder des ersten und zweiten Kanals zu den korrespondierenden Betrachteraugen, dadurch gekennzeichnet, daß ein Bildspeicher (8a, 9a, 16a) zur Zwischenspeicherung der rechten und linken Teilbilder (TB) vorgesehen ist, so daß die Teilbilder (TB) als Vollbilder progressiv ausgelesen und die Teilbilder des einen Kanals mit wenigstens zweifacher Bildfrequenz abwechselnd mit den Teilbildern (TB) des anderen Kanals in dem Display (11) dargestellt werden.

18. Vorrichtung nach Anspruch 17, dadurch gekennzeichnet, daß der Bildspeicher (8a, 9a, 16a) je Kanal eine Vollbildspeicher (8a) zur Zwischenspeicherung der Teilbilder (TB) aufweist und je Kanal einen Framegrabber (9a) aufweist, der die Teilbilder (TB) mit vierfacher Bildfrequenz aus dem Vollbildspeicher (8a) ausliest und dem Display (11) zur abwechselnden Darstellung der Teilbilder (TB) zuführt.

19. Vorrichtung nach Anspruch 17 oder 18, dadurch gekennzeichnet, daß ein Signal-Koppler (6c) mit dem Framegrabber (9a) verbunden ist zur abwechselnden Zuführung der Teilbilder.

## Claims

1. Method for representation of a stereoscopic image, which is built up of one each of a right-hand and a left-hand partial image, on a display (11), which is associated with at least one separating device (10), which always associates only partial images of one image channel with each observer eye, characterised thereby, that each partial image is represented in alternation with the other partial image as respective progressively scanned full image on the display (11).

2. Method according to claim 1, characterised thereby, that the partial images are represented at least twice per recording duration for each partial image, wherein the recording duration corresponds with the signal duration of a partial image.

3. Method according to claim 1 or 2, characterised thereby, that the horizontal image deflection at the display (11) amounts to at least 60 kilohertz, whilst the vertical deflection amounts to at least 100 hertz.

4. Method according to one of the claims 1 to 3, characterised thereby, that the double representation of both the partial images takes place within at least 60 milliseconds, preferably within or less than 50 milliseconds.

5. Method according to one of the claims 1 to 3, characterised thereby, that the double representation of both the partial images takes place within or less than 40 milliseconds.

6. Method according to one of the claims 1 to 5, characterised thereby, that the shutter (10) is successively activated or deactivated according to the scanning direction (downwards from above or upwardly from below) during the progressively scanned representation of the partial images on the display (11).

7. Method according to claim 6, characterised thereby, that the shutter (10) is provided with a line-shaped or strip-shaped vertical structure which follows at the display (11) in the switching-over sequence of the scanning direction.

8. Method according to one of the preceding claims, characterised thereby, that the full images (VB) are obtained by conversion of conventional video signals by the interlacing method from two half-images (HB, HB) each time by intermediate storage of the same in an image storage device (8; 9; 16), wherein the partial images are read out progressively or line by line as full images from the full image storage devices (8a) and fed to a video signal coupler (6c), from which the partial images of the one channel are fed in alternation at a suitable frequency with the partial images of the other channel to the display (11).

9. Method according to claim 8, characterised thereby, that the partial images are read out progressively or line by line from the full image storage devices (8a) by means of frame grabbers.

10. Method according to claim 8 or 9, characterised thereby, that a graphics card of a computer or a reproduction monitor is used as video signal coupler (6c).

11. Method according to one of the claims 8, 9 and 10, characterised thereby, that the partial images of the one channel are fed in alternation at four times the horizontal deflection frequency with the partial images of the other channel out of the video signal coupler (6c) to the display (11).

12. Method according to one of the preceding claims, wherein the video signal originates from the output of a reproducing device (2a), characterised thereby, that it is fed to a single half image detector (4a) with integrated video divider, in which detector the first half image (HB/A1.1...) of the video signal is detected and fed by way of the video divider to the first channel, whilst the second half image (HB/B1.2...) is fed to the second channel, or that it is fed merely to a video divider, from where the signals are distributed into two processing channels, in which the respective partial image, which does not belong to the associated processing channel, is blanked out so that in each channel a half image (HB) of its associated partial image is processable, wherein the signals of both the half images (HB/A1.1... and HB/ B1.1...) are fed to a respective interpolator (12a) and a respective full image storage device (8b), wherein each interpolator (12a) assembles the respectively missing lines between the half image of its channel with generated lines into a second half image (HB) and furthermore feeds this to the respective full image storage device (8a) so that a complete partial image or a pair (VB) of two half images belonging together is available in the full image storage device for further processing and progressively scanned representation on the display (11).

13. Method according to one of the preceding claims, characterised thereby, that the partial images are read out progressively or line by line from the full image storage devices (8a), in a given case by means of frame grabbers (9a) and fed to a video signal coupler (6c or 6b), for example a graphics card of a computer or a reproduction monitor, from where the full images are fed at a suitable frequency and in time sequence to the reproduction monitor (11).

14. Method according to one of the preceding claims, wherein a liquid crystal display monitor or a cathode ray tube monitor is used as display, characterised thereby, that the duration of representation or the afterglow time of the picture screen is chosen to be shorter than 9 milliseconds.

15. Method according to claim 1, characterised thereby, that two partial images (TB) are represented in alternation with two of the other partial images (TB) for each conventional standard frame.

16. Method according to claim 15, characterised thereby, that each of both the partial images (TB), which are represented at the display (11) during a standard frame, is built up of a respective half image (HB) and an interpolated half image (HB) generated therefrom by an interpolation process.

17. Device for the performance of a method according to claim 1, with a display (11) for the representation of the stereoscopic image, wherein a separating device (10) is provided for the channelwise association of the partial images of the first and the second channel with the corresponding observer eyes, characterised thereby, that an image storage device (8a, 9a, 16a) is provided for the intermediate storage of the right-hand and left-hand partial images (TB) so that the partial images (TB) are read out progressively as full images and the partial images of the one channel are represented in the display (11) in alternation at at least twice the frame frequency with the partial images (TB) of the other channel.

18. Device according to claim 17, characterised thereby, that the image storage device (9a, 9a, 16a) comprises a full image storage device (8a) for the intermediate storage of the partial images (TB) for each channel and a frame grabber (9a), which reads the partial images (TB) out of the full image storage device (8a) at four times the frame frequency and feeds them to the display (11) for the alternating representation of the partial images (TB), for each channel.

19. Device according to claim 17 or 18, characterised thereby, that a signal coupler (6c) is connected with the frame grabber (9a) for the alternating feed of the partial images.

## Revendications

1. Procédé pour l'affichage d'une image stéréoscopique, qui est formée à chaque fois d'une image partielle droite et d'une gauche, sur un écran de visualisation (11) auquel est affecté au moins un dispositif de séparation (10) qui n'affecte, à chaque oeil d'un observateur qu'une seule image partielle d'un canal de l'image, caractérisé en ce que chaque image partielle est représentée de façon alternative avec l'autre image partielle en tant qu'image complète à chaque fois progressivement balayée sur l'écran de visualisation (11).

2. Procédé selon la revendication 1, caractérisé en ce que les images partielles sont représentées au moins deux fois par durée de prise pour chaque image partielle et la durée de prise correspond à la durée du signal d'une image partielle.

3. Procédé selon la revendication 1 ou 2, caractérisé en ce que la déviation horizontale de l'image sur l'écran de visualisation (11) est d'au moins 60 kHz, tandis que la déviation verticale de l'image est d'au moins 100 Hz.

4. Procédé selon l'une des revendications 1 à 3, caractérisé en ce que la représentation doublée des deux images partielles a lieu dans les au moins 60 ms avantageusement dans les au moins 50 ms ou moins.

5. Procédé selon l'une des revendications 1 à 3, caractérisé en ce que la représentation doublée des deux images partielles se produit à l'intérieur de 40 ms ou moins.

6. Procédé selon l'une des revendications 1 à 5, caractérisé en ce que, dans la représentation progressivement balayée des images partielles sur l'écran de visualisation (11), l'obturateur (10) est en succession activé ou respectivement désactivé, selon la direction du balayage (du haut vers le bas ou respectivement du bas vers le haut).

7. Procédé selon la revendication 6, caractérisé en ce que l'obturateur (10) est pourvu d'une structure verticale en forme de lignes ou de raies qui suit dans la suite de changement, la direction du balayage sur l'écran de visualisation (11).

8. Procédé selon l'une des revendications précédentes, caractérisé en ce que les images complètes (VB) sont obtenues par transformation de signaux vidéo traditionnels selon le procédé de saut de lignes à partir à chaque fois de deux demi-images (HB, HB) par mémorisation intermédiaire de celles-ci dans une mémoire d'images (8 ; 9 ; 16), et les images partielles sont lues progressivement (ou par ligne) en tant qu'images complètes, des mémoires d'images complètes (8a) et sont conduites à un coupleur de signaux vidéo (6c), duquel les images partielles du premier canal sont conduites à une fréquence appropriée, alternativement avec les images partielles de l'autre canal, à l'écran de visualisation (11).

9. Procédé selon la revendication 8, caractérisé en ce que les images partielles sont lues des mémoires d'images complètes (8a) au moyen d'extracteurs de trame, progressivement (ou respectivement par ligne).

10. Procédé selon la revendication 8 ou 9, caractérisé en ce qu'en tant que coupleur (6c) de signaux vidéo, on utilise une carte de graphiques d'un ordinateur ou d'un moniteur de restitution.

11. Procédé selon l'une des revendications 8, 9 ou 10, caractérisé en ce que, du coupleur de signaux vidéo (6c), les images partielles d'un canal sont conduites à une fréquence de déviation horizontale quadruple, alternativement, avec les images partielles de l'autre canal, à l'écran de visualisation (11).

12. Procédé selon l'une des revendications précédentes, où le signal vidéo provient de la sortie d'un dispositif de restitution (2a), caractérisé en ce qu'il est conduit à un détecteur unique de demi-image (4a) avec répartiteur vidéo intégré, dans lequel détecteur, la première demi-image (HB/A 1.1■) du signal vidéo est détectée et est conduite, par le répartiteur vidéo, du premier canal tandis que la seconde demi-image (HB/B 1.2■) est conduite au second canal ou bien en ce qu'il n'est conduit qu'à un répartiteur vidéo d'où les signaux sont répartis en deux canaux de traitement dans lesquels, à chaque fois, l'image partielle qui n'appartient pas au canal de traitement correspondant est extraite, donc, dans chaque canal, une demi-image (HB) de son image partielle affectée peut être traitée et les signaux des deux demi-images (HB/A 1.1■ et HB/B 1.2■) sont conduits à) chaque fois à un interpolateur (12a) et à une mémoire d'images complètes (8b), chaque interpolateur (12a) recomposant les lignes à chaque fois manquantes entre la demi-image de son canal par des lignes générées en une seconde demi-image (HB) pour conduire celle-ci à la mémoire d'images complètes (8a) de manière que dans la mémoire d'images complètes puisse être détectée une image partielle intégrale ou respectivement une paire (VB) de deux demi-images allant ensemble pour un plus ample traitement et une représentation en balayage progressif sur l'écran de visualisation (11).

13. Procédé selon l'une des revendications précédentes, caractérisé en ce que les images partielles sont lues, en tant qu'images complètes, des mémoires d'images complètes (8b), le cas échéant au moyen de l'extracteur de trame (9a), progressivement (par ligne) et sont conduites à un coupleur de signaux vidéo (6c ou 6b), par exemple, une carte de graphique, d'un ordinateur ou respectivement d'un moniteur de restitution, d'où les images complètes à la fréquence appropriée, en série dans le temps, sont conduites au moniteur de restitution (11).

14. Procédé selon l'une des revendications précédentes, où l'on utilise en tant qu'écran de visualisation, un moniteur à LCD ou à CRT, caractérisé en ce que la durée de représentation ou respectivement le temps de persistance de l'écran de l'image est choisi plus petit que 9 ms.

15. Procédé selon la revendication 1, caractérisé en ce que par trame standard traditionnelle, deux images partielles (TB) sont représentées de façon alternée avec deux des autres images partielles (TB).

16. Procédé selon la revendication 15, caractérisé en ce que chacune des deux images partielles (TB) qui sont représentées, pendant une trame standard, sur l'écran de visualisation (11), est formée à chaque fois d'une demi-image (HB) et d'une demi-image (HB) interpolée, générée par un procédé d'interpolation.

17. Dispositif pour la mise en oeuvre d'un procédé selon la revendication 1, avec un écran de visualisation (11) pour la représentation de l'image stéréoscopique où un dispositif de séparation (10) est prévu pour l'affectation par canal des images partielles des premier et second canal à l'oeil correspondant de l'observateur, caractérisé en ce qu'une mémoire d'images (8a, 9a, 16a) est prévue pour la mémorisation intermédiaire des images partielles droite et gauche (TB), de manière que les images partielles (TB) puissent être lues progressivement en tant qu'images complètes et les images partielles d'un canal sont représentées avec au moins une fréquence d'image double de façon alternative avec les images partielles (TB) de l'autre canal sur l'écran de visualisation (11).

18. Dispositif selon la revendication 17, caractérisé en ce que la mémoire d'image (8a, 9a, 16a) présente, par canal, une mémoire d'images complètes (8a) pour la mémorisation intermédiaire des images partielles (TB) et chaque canal présente un extracteur de trame (9a) qui lit les images partielles (TB) à une fréquence d'image quadruple de la mémoire d'images complètes (8a), et les conduit à l'écran de visualisation (11) pour une représentation alternée des images partielles (TB).

19. Dispositif selon la revendication 17 ou 18, caractérisé en ce qu'un coupleur de signaux (6c) est relié à l'extracteur de trame (9a) pour la conduite alternée des images partielles.
